# EUROPÄISCHE PATENTSCHRIFT

(11) **EP 2 520 451 B1**
(45) Veröffentlichungstag und Bekanntmachung des Hinweises auf die Patenterteilung: **01.02.2017**
(21) Anmeldenummer: 12165975.9
(22) Anmeldetag: 27.04.2012
(51) Int. Cl.: B60J 5/06, B60J 7/06, B60P 7/04, B62D 33/04

(54) **Planenaufbau für ein Nutzfahrzeug**
Canvas cover for a commercial vehicle
Superstructure bâchée pour un véhicule utilitaire

(30) Priorität: 04.05.2011 DE 102011050108
(43) Veröffentlichungstag der Anmeldung: 07.11.2012
(73) Patentinhaber: Schmitz Cargobull AG, 48341 Altenberge (DE)
(72) Erfinder: Derks, Roger Geradus Christiaan, 5922 XT Venlo (NL)
(74) Vertreter: Cohausz & Florack

(56) Entgegenhaltungen:
- EP-A2- 0 131 706
- DE-C1- 19 628 431
- DE-U1- 29 608 103
- GB-A- 2 293 144

## Beschreibung

Die Erfindung betrifft einen Planenaufbau für ein Nutzfahrzeug, der mindestens eine Seitenplane und eine Arretiereinrichtung zum Fixieren der Seitenplane in einer geschlossenen Stellung aufweist. Die Seitenplane des Planenaufbaus umfasst dabei mindestens eine Schieberunge, die längs einer Längs-, Stirn- oder Rückseite des Planenaufbaus verschiebbar ist, um die Seitenplane aus einer Schließstellung, in der sie die ihr jeweils zugeordnete Längs-, Stirn- oder Rückseite des Planenaufbaus abdeckt, in eine Öffnungsstellung zu bringen, in der ein von dem Planenaufbau umgebener Laderaum des Nutzfahrzeugs zugänglich ist.

Des Weiteren weist die Seitenplane einen Endabschnitt auf, der frei über die Schieberunge hinaussteht und an dessen in Schließstellung parallel zur Schieberunge ausgerichteten Rand ein Spannelement befestigt ist. Dieses Spannelement ist bei geschlossenem Planenaufbau in einer Schließposition mittels einer Arretiereinrichtung an dem Planenaufbau fixiert. Aus dieser fixierten Schließposition kann das Spannelement zum Verschieben der Seitenplane in die Öffnungsstellung gelöst werden.

Bei Nutzfahrzeugen der hier in Rede stehenden Art handelt es sich typischerweise um einen Auflieger für einen Sattelzug, um einen Lastkraftwagen oder um einen konventionellen Anhänger, bei denen jeweils der Laderaum von dem Planenaufbau umgeben und beim Transport das auf der Ladefläche des Nutzfahrzeugs stehende Transportgut gegenüber der Umgebung abgeschirmt wird. Insbesondere dann, wenn es sich bei dem Nutzfahrzeug um einen Auflieger handelt, werden solche Fahrzeuge in der Fachsprache auch als "Curtain-Sider" bezeichnet. In der Regel besitzt ihr Planenaufbau eine quaderförmige Grundform, bei der das Dach und die Längsseiten durch flexible, längs der jeweiligen Längsseite des Nutzfahrzeugs verschiebbare Dach- und Seitenplanen gebildet ist, während ihre in Fahrtrichtung vordere Stirn- und ihre in Fahrtrichtung rückwärtige Rückseite aus einem festen Material gefertigt sind. Bei geschlossenem Planenaufbau schließen die Seitenplanen den Planenaufbau an dessen Längsseiten dicht ab, während bei in eine geöffnete Stellung geschobenen Seitenplanen die Ladefläche des Nutzfahrzeugs von der jeweiligen Längsseite her beladen werden kann.

Um die flexiblen Planen zu halten und zu führen, umfassen die Planenaufbauten üblicherweise eine Tragkonstruktion, die aus in Bezug auf die Ladefläche senkrecht ausgerichteten Stützrungen und parallel zu der Ladefläche ausgerichteten, von den Stützrungen getragenen Balken gebildet ist, an denen die Führungen für die verschiebbaren Seitenplanen vorgesehen sind. Selbstverständlich kann bei einer geeigneten Tragkonstruktion an Stelle einer festen Stirn- oder Rückwand ebenfalls eine Seitenplane vorgesehen sein, um den Planenaufbau auch dort so auszubilden, dass er durch Verschieben der jeweiligen Seitenplane leicht geöffnet und geschlossen werden kann.

Um das Öffnen und Schließen der Seitenplane für einen einzelnen Benutzer so einfach wie möglich zu gestalten, sind beispielsweise in der DE 296 08 103 U1 und der GB 2 106 573 A jeweils Planenaufbauten vorgeschlagen worden, bei denen die den Längsseiten des Planenaufbaus zugeordneten Seitenplanen mit Schieberungen kombiniert sind, die in an der jeweiligen Tragkonstruktion vorgesehenen besonders gestalteten Führungsschienen in Längsrichtung des Nutzfahrzeugs verschiebbar gelagert sind. In den Führungsschienen sind die Schieberungen so geführt, dass sie von einer einzelnen Person verkantungsfrei aus der Schließstellung in eine geöffnete Stellung geschoben werden können. Durch geeignete, mit den Schieberungen verkoppelte Hilfselemente wird dabei sichergestellt, dass sich die Seitenplanen in regelmäßige Falten legen.

Eine weitere Erleichterung des Öffnens und Schließens von mit Schieberungen versehenen Planenaufbauten der voranstehend erläuterten Art konnte durch Planenspanneinrichtungen erzielt werden. Ein Beispiel für eine solche Einrichtung ist beispielsweise in der DE 196 28 431 C1 beschrieben. Bei dieser Spanneinrichtung handelt es sich um einen sich über die Höhe des Planenaufbaus erstreckenden, stangenförmigen Aufrollstab. Dieser nimmt eine mit einem Keder verdickte und versteifte, in Schließstellung vertikal ausgerichtete Seitenkante eines Endabschnitts der Seitenplane auf, der in Richtung auf die jeweilige Ecke des Planenaufbaus über die dieser Ecke zugeordnete Schieberunge frei hinaussteht. Um mit dem Spannelement die Seitenplane in der Schließstellung straffen zu können, kann das Spannelement in einer vertikal verlaufenden Nut eines Eckpfeilers des Planenaufbaus beweglich gelagert werden. Die Nut dient insoweit als Arretiereinrichtung, durch die das Spannelement bei ausreichend gespannter Seitenplane kraft-und formschlüssig an dem Planenaufbau fixiert ist. Um die erforderliche Spannung der Seitenplane zu erzeugen, kann das in der Nut sitzende Spannelement manuell oder motorisch um seine Längsachse verdreht werden. Konkret ist dazu bei dem hier erläuterten bekannten Planenaufbau ein entriegelbarer Rastantrieb vorgesehen, welcher im Fußteil des Spannelements angeordnet ist und das Spannelement in der jeweiligen Drehstellung durch selbsttätiges Einrasten fixiert. Soll die Seitenplane aufgeschoben werden, wird das Rastwerk entriegelt und das Spannelement um seine Längsachse so weit zurück gedreht, dass die Seitenplane gelockert und das Spannelement aus der ihm zugeordneten Nut genommen werden kann. Anschließend kann die Seitenplane ungehindert in Richtung des jeweils anderen Endes des Fahrzeugs geschoben werden, um den vom Planenaufbau umschlossenen Laderaum zugänglich zu machen.

Der Vorteil dieser Konstruktion gegenüber bekannten Lösungen, bei denen ein Führungswagen direkt an die jeweilige, in einer Ecke des Planenaufbaus angeordnete Stützrunge angeschlagen und dort beispielsweise durch eine Hebeeinrichtung verspannt wird, besteht darin, dass auf Dichtungen zwischen der jeweiligen endseitigen Schieberunge und der zugeordneten Stützrunge des Planenaufbaus verzichtet werden kann. Die Dichtheit an der Stelle, an der die Tragkonstruktion des Planenaufbaus im geschlossenen Zustand mit seiner jeweiligen Seitenplane verkoppelt ist, wird stattdessen dadurch gewährleistet, dass der überschüssige auf dem in der Nut arretierten Spannelement aufgerollte Planenendabschnitt stramm an der jeweiligen Stützrunge des Planenaufbaus gehalten und so der Zugang zum Laderaum gegenüber der Umgebung sicher abgeschirmt ist. Wenn die Schieberungen selbst während des Spannens noch verschiebbar sind, können die über das von der Arretiereinrichtung gehaltene Spannelement aufgebrachten Spannkräfte bei geschlossenem Planenaufbau zudem dazu genutzt werden, die jeweilige Seitenplane dauerhaft straff und sicher zu spannen.

Diesen Vorteilen steht bei geöffnetem Planenaufbau der Nachteil gegenüber, dass nach dem Lösen des Spannelements aus seiner arretierten Stellung der das Spannelement tragende freie Endabschnitt der jeweiligen Seitenplane unkontrolliert an der ihm zugeordneten Schieberunge hinund herpendelt. Dies behindert nicht nur das Aufschieben der jeweiligen Seitenplane, sondern bringt auch die Gefahr mit sich, dass der Endabschnitt insbesondere im Bereich des Übergangs zu der jeweiligen endseitigen Schieberunge, insbesondere an der Stelle, an der die Schieberunge mit der Seitenplane verkoppelt ist, in Folge der dort dann lokal auftretenden hohen Scher- und Reibbelastungen einreißt. Beschleunigt werden kann dieser Effekt durch das Eigengewicht des Spannelements, das nach dem Lösen und Entnehmen des Spannelements an dem freien Endabschnitt der Seitenplane hängt.

Vor dem Hintergrund des voranstehend erläuterten Standes der Technik bestand die Aufgabe der Erfindung darin, einen Planenaufbau für Nutzfahrzeuge zu schaffen, bei dem sich eine Seitenplane bei geschlossenem Planenaufbau auf einfache Weise spannen und zum Öffnen des Planenaufbaus auf ebenso einfache Weise ohne die Gefahr einer Beschädigung der Plane oder Behinderung des Schiebevorgangs aus der geschlossenen in eine geöffnete Position schieben lässt.

Zur Lösung dieser Aufgabe schlägt die Erfindung den in Anspruch 1 angegebenen Planenaufbau vor.

Vorteilhafte Ausgestaltungen der Erfindung sind in den abhängigen Ansprüchen angegeben und werden nachfolgend wie der allgemeine Erfindungsgedanke im Einzelnen erläutert.

In Übereinstimmung mit dem eingangs erläuterten Stand der Technik weist ein erfindungsgemäßer Planenaufbau für ein Nutzfahrzeug mindestens eine Seitenplane auf, die mindestens eine Schieberunge, die längs einer Längs-, Stirn- oder Rückseite des Planenaufbaus verschiebbar ist, um die Seitenplane aus einer Schließstellung, in der sie die ihr jeweils zugeordnete Längs-, Stirn- oder Rückseite des Planenaufbaus abdeckt, in eine Öffnungsstellung zu bringen, in der ein von dem Planenaufbau umgebener Laderaum des Nutzfahrzeugs zugänglich ist, und mindestens einen Endabschnitt umfasst, der frei über die Schieberunge hinaus steht und an dessen in Schließstellung parallel zur Schieberunge ausgerichteten Rand ein Spannelement befestigt ist.

Darüber hinaus ist bei einem erfindungsgemäßen Planenaufbau ebenfalls in Übereinstimmung mit dem eingangs erläuterten Stand der Technik eine Arretiereinrichtung vorgesehen, die das Spannelement bei geschlossenem Planenaufbau in einer Schließposition an dem Planenaufbau hält und die lösbar ist, um das Spannelement zum Verschieben der Seitenplane in die Öffnungsstellung von der Arretiereinrichtung zu trennen.

Das Spannelement kann beispielsweise stangenförmig ausgebildet sein. Ebenso kann es durch eine an dem jeweiligen Rand der Seitenplane beispielsweise in Form eines Keders ausgebildete Verdickung verwirklicht sein.

Erfindungsgemäß ist nun an der Seitenplane des Planenaufbaus eine Aufnahme vorhanden, in der bei geöffneter Seitenplane das Spannelement mit seinem oberen, dem von der Ladefläche abgewandten oberen Rand des Planenaufbaus zugeordneten Endabschnitt fixierbar ist.

Bei einem erfindungsgemäßen Planenaufbau ist also an mindestens einer der aus einer Schließstellung in eine Öffnungsstellung und zurück verschiebbaren Seitenplanen eine Möglichkeit geschaffen, den Seitenplanen-Endabschnitt, der beim Stand der Technik nach dem Lösen der jeweiligen Seitenplane lose an der dem jeweiligen Seitenplanenende zugeordneten endseitigen Schieberunge hängt, an der Seitenplane selbst so zu haltern, dass er beim Verschieben in Längsrichtung der jeweiligen Seitenplane gesehen zur Mitte der betreffenden Seitenplane umgeschlagen ist und eng an der Seitenplane anliegt.

Die erfindungsgemäß vorgesehene Halterung ist dabei in Form mindestens einer dem oberen Ende des Spannelements zugeordneten Aufnahme verwirklicht und so ausgelegt, dass sie auch unter den in der Praxis herrschenden rauen Arbeitsbedingungen leicht zu bedienen ist. Hierzu ist es lediglich erforderlich, das obere Ende des Spannelements an der ihm zugeordneten oberen Aufnahme zu positionieren und dort so zu befestigen, dass eine ausreichender Fixierung des Spannelements an der Seitenplane gewährleistet ist. Dabei kann die erfindungsgemäß vorgesehene Aufnahme selbst so ausgelegt sein, dass sie einerseits das mit ihr verkoppelte Spannelement an der Seitenplane festlegt und andererseits das Gewicht des Spannelements aufnimmt.

Besonders einfach wird die Handhabung bei der Befestigung des Spannelements jedoch dann, wenn zusätzlich zu der Aufnahme eine Halteeinrichtung vorgesehen ist, an der bei geöffneter Seitenplane der untere, der Ladefläche zugeordnete Endabschnitt des Spannelements an der Seitenplane abstützbar ist.

Die erfindungsgemäß vorgesehene Aufnahme für das obere Ende des Spannelements kann beispielsweise durch ein an der jeweiligen Seitenplane angebrachtes Formteil verwirklicht werden, das eine der Form des ihm zugeordneten Endabschnitts so angepasste Öffnung besitzt, dass der betreffende Endabschnitt nach dem Einführen in die Öffnung mit einem gewissen Spiel in der Aufnahme gehalten ist. Hierzu kann beispielsweise an der jeweiligen Seitenplane mittels eines Band- oder Streifenabschnitts eines flexiblen Materials eine Schlaufe gebildet sein, in deren Schlaufenöffnung sich der zugeordnete Endabschnitt des Spannelements schieben lässt. Ebenso ist es denkbar, die Aufnahme durch eine aus Metall oder Kunststoff geformte Schelle oder ein nach unten offenes Formteil zu bilden, in dessen Öffnung der zugeordnete Endabschnitt des Spannelements eingeführt werden kann. Ebenso kann die Aufnahme federnd elastisch ausgelegt sein, so dass das stabförmige Spannelement mit seinem oberen Endabschnitt nach Art einer Clipsverbindung federnd elastisch in der Aufnahme gehalten ist. Hierzu kann als Aufnahme an der Seitenplane ein elastisch nachgiebiger Bügel befestigt sein, der mit einem Abstand zur Planenoberfläche angeordnet ist, der in einem für die Erzeugung der notwendigen elastischen Haltekraft ausreichenden Abstand zur Planenoberfläche angeordnet ist und unter den zum Befestigen der zugeordnete Endabschnitt des Spannelements unter Aufspreizung des Bügels geschoben wird. Schließlich kann bei entsprechender Formgebung des zugeordneten Endes des Spannelements die Aufnahme auch als Hakenelement ausgebildet sein, in den der obere Endabschnitt des Spannelements eingehakt werden kann. Letztere Ausgestaltung ist beispielsweise in Kombination mit einem Formelement, das das Spannelement hinsichtlich seiner Bewegungen quer oder senkrecht zur Planenebene festlegt, einer insbesondere dann geeignet, wenn alleine eine Aufnahme ohne eine zusätzliche Halteeinrichtung zum Haltern des Spannelements vorgesehen ist.

Die erfindungsgemäß optional dem unteren Ende des Spannelements zugeordnete Halteeinrichtung kann ebenfalls in unterschiedlichster Weise ausgebildet sein. Wesentlich ist dabei, dass durch die Kombination von Aufnahme und Halteeinrichtung eine Möglichkeit geschaffen ist, während des Verschiebens der Seitenplane den losen Endabschnitt mit dem von ihm getragenen Spannelement verliersicher eng an der Seitenplane zu halten. Ist die Aufnahme so ausgelegt, dass sie die Bewegungen des Spannelements nur quer zu dessen Längsachse verhindert, also keine Gewichtskräfte aufnimmt, so übernimmt die Halteeinrichtung die Abstützung des Gewichtskraft. Zu diesem Zweck kann die Halteeinrichtung als Haken ausgebildet sein, mit dem das zugeordnete untere Ende des Spannelements verkoppelt wird. Hierzu können ein Griff oder eine Halteschlaufe genutzt werden, die üblicherweise im Bereich des betreffenden Endabschnitts des Spannelements vorgesehen sind, um dessen Arretierung und Lösen zu erleichtern. Genauso kann die Halteeinrichtung nach Art eines Köchers ausgebildet sein, in den das Spannelement mit seinem unteren Ende gesetzt wird. Ist dagegen die dem oberen Ende des Spannelements zugeordnete Aufnahme so ausgelegt, dass sie Gewichtskräfte aufnehmen kann, kann es ausreichen, wenn die Halteeinrichtung nur die seitlichen, quer zur Längsachse des Spannelements gerichteten Bewegungen verhindert. Hierzu eignen sich die voranstehend im Zusammenhang mit der Aufnahme bereits erläuterten Schnallen, Schellen, federnde Elemente etc.

Die Positionen der erfindungsgemäß vorgesehenen Aufnahme und der optionalen Halteeinrichtung kann abhängig von der übrigen Gestaltung des Planenaufbau gewählt werden. Üblicherweise ist der obere, in einer Führungsbahn des Planenaufbaus laufende Rand der Seitenplane durch eine in der Regel aus einem flexiblen Material bestehende Dichtlippe gegenüber der Umgebung abgeschirmt, die den unvermeidbar vorhandenen Führungsschlitz und den oberen Randabschnitt der Seitenplane auf der der Umgebung zugeordneten Außenseite des Planenaufbaus abdeckt. Um bei Anwesenheit einer solchen Dichtlippe zu verhindern, dass der in erfindungsgemäßer Weise beim Verschieben an der Seitenplane festgelegte Endabschnitt durch zwischen der Dichtlippe und dem Endabschnitt herrschende Reibung übermäßig belastet wird, kann es zweckmäßig sein, die optional vorhandene Halteeinrichtung in Längsrichtung der jeweiligen Seitenplane gesehen in einem größeren Abstand zur Mitte der Seitenplane anzuordnen als die dem oberen Abschnitt des Spannelements zugeordnete Aufnahme.

Bei einer solchen Anordnung von Aufnahme und Halteeinrichtung ist das Spannelement im mittels der Aufnahme und der Halteeinrichtung an der Seitenplane gehaltenen Zustand so schräg ausgerichtet, dass der obere Rand des Seitenplanen-Endabschnitts unter einem spitzen Winkel zum übrigen oberen Rand der Seitenplane ausgerichtet ist. Infolgedessen läuft der Endabschnitt flach unter die jeweils vorhandene Dichtlippe, ohne dass es dabei zu größeren Schabbelastungen des oberen Rands des Endabschnitts kommt. Vorteilhafterweise sind also die bei einem erfindungsgemäßen Planenaufbau an der Seitenplane vorgesehene Aufnahme und die Halteeinrichtung so angeordnet, dass bei in der Aufnahme fixiertem und an der Halteeinrichtung abgestütztem Spannelement die auf die Ebene der Seitenplane projizierte Senkrechte auf die Längsachse des Spannelements einen spitzen Winkel mit dem oberen Rand der Seitenplane einschließt.

Dadurch, dass in Längsrichtung der Seitenplane gesehen die Aufnahme in Richtung der Mitte der Seitenplane um eine so große Länge versetzt ist, dass der Endabschnitt der Seitenplane bei in der Aufnahme fixiertem oberen Endabschnitt des Spannelements mit seinem dem betreffenden Endabschnitt des Spannelements zugeordneten Flächenbereich flach an der Seitenplane anliegt, lässt sich dabei die Gefahr einer Beschädigung des Endabschnitts weiter reduzieren. Hierzu kann der Abstand der Aufnahme zu dem Punkt, an dem der Endabschnitt im Bereich seines oberen Rands mit der ihm zugeordneten Schieberunge verbunden ist, im Wesentlichen gleich der Länge des oberen Rands des Endabschnitts sein.

Eine besonders stabile, gebrauchstaugliche Ausgestaltung der Erfindung ergibt sich, wenn die Aufnahme oder die Halteeinrichtung fest mit der an den Endabschnitt der Seitenplane angrenzenden Schieberunge verbunden sind, wobei sich eine optimale Stabilität ergibt, wenn sowohl die Aufnahme als auch die Halteeinrichtung an der betreffenden Schieberunge befestigt sind.

Das Verschieben der Seitenplane kann dabei dadurch erleichtert werden, dass im Bereich der an den Endabschnitt der Seitenplane grenzenden Schieberunge ein von der der Umgebung zugeordneten Außenseite der Seitenplane zugänglicher Griff vorgesehen ist. Auch bei Ausgestaltungen, in denen ein solcher Griff vorhanden ist, erweist es sich im Übrigen als besonders vorteilhaft, wenn die Aufnahme und die Halteeinrichtung in der voranstehend beschriebenen Weise in Längsrichtung der Seitenplane so in Richtung der Mitte der Seitenplane versetzt zueinander angeordnet sind, dass das in der Aufnahme und an der Halteeinrichtung gehaltene Spannelement in Bezug auf die Schieberunge schräg ausgerichtet ist. Durch eine solche schräge Ausrichtung ist sichergestellt, dass der optional an der Runge vorgesehene Griff jederzeit frei zugänglich ist.

Grundsätzlich ist es denkbar, die erfindungsgemäß vorgesehene Aufnahme und Halteeinrichtung an der dem Laderaum des Nutzfahrzeugs zugeordneten Innenseite der Seitenplane vorzusehen. Dies kann dann sinnvoll sein, wenn die Konstruktion des Planenaufbaus ein Umschlagen des Endabschnitts nach außen nicht zulässt. Eine besonders einfache Handhabung eines erfindungsgemäßen Planenaufbaus ergibt sich jedoch dann, wenn die Halteeinrichtung und die Aufnahme an der der Umgebung des Planenaufbaus zugeordneten Außenseite des Planenaufbaus positioniert sind.

Selbstverständlich kann das bei einem erfindungsgemäßen Planenaufbau vorgesehene Spannelement eine Betätigungseinrichtung zum Spannen der Seitenplane im geschlossenen Zustand umfassen, wie sie bereits aus dem Stand der Technik für stangenförmige Spannelemente der in Rede stehenden Art bekannt sind.

Ebenso selbstverständlich lässt sich ein erfindungsgemäßer Planenaufbau so auslegen, dass seine Höhe über der Ladefläche verstellbar ist. Hierzu können einerseits längenverstellbare Spannelemente vorgesehen sein oder die erfindungsgemäß vorgesehene Aufnahme bzw. die erfindungsgemäß vorgesehene Halteeinrichtung werden so ausgelegt, dass sie auch bei unterschiedlichen Höhen des Planenaufbaus die ihnen erfindungsgemäß zugedachte Stütz-und Haltefunktion übernehmen können. Hierzu kann beispielsweise ein zum Ankoppeln des der Halteeinrichtung zugeordneten Endes vorgesehenes Verbindungselement, in seiner Länge verstellbar, ausgelegt werden.

Nachfolgend wird die Erfindung anhand von Ausführungsbeispielen näher erläutert. Es zeigen:

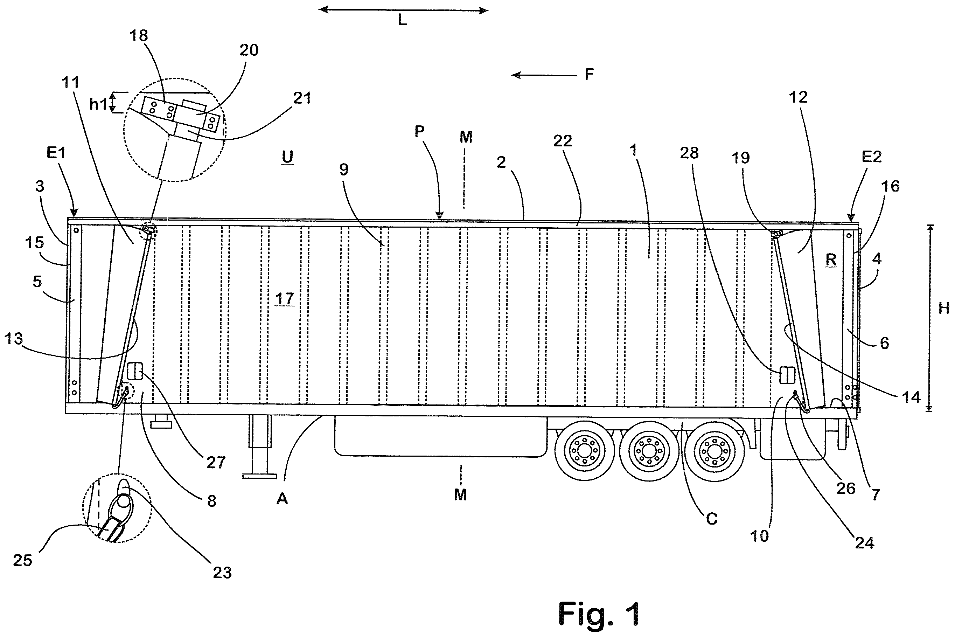

- Fig. 1: einen zum Aufschieben seines Planenaufbaus vorbereiteten Auflieger für einen Sattelzug in seitlicher Ansicht;
- Fig. 2: den Auflieger mit geschlossenem Planenaufbau in seitlicher Ansicht.

Der Auflieger A umfasst einen quaderförmigen, langgestreckten Planenaufbau P, der auf einem Fahrwerkschassis C montiert ist. Der Planenaufbau P schirmt im geschlossenen Zustand den von ihm umgebenen Laderaum R des Aufliegers A gegenüber der Umgebung U ab. Dabei umfasst der Planenaufbau P zwei bei geschlossenem Planenaufbau dessen Längsseiten abdeckende Seitenplanen, von denen hier nur die der in Fahrtrichtung F linken Längsseite des Planenaufbaus P zugeordnete Seitenplane 1 sichtbar ist, eine das Dach 2 des Planenaufbaus P bildende Dachplane, eine der hier nicht gezeigten Zugmaschine des Sattelzugs zugeordnete, in Fahrtrichtung F am vorderen Ende des Planenaufbaus P angeordnete Stirnwand 3 und eine Rückwand 4, die am in Fahrtrichtung F rückwärtigen, der Stirnwand 3 gegenüberliegenden Ende des Planenaufbaus P angeordnet ist. Während die Seitenplanen und die Dachplane des Planenaufbaus P aus einem konventionellen flexiblen Planenmaterial bestehen, sind die Stirnwand 3 und die Rückwand 4 in an sich ebenfalls bekannter Weise aus formstabilen Profilen zusammengesetzt.

Der Planenaufbau P umfasst des Weiteren eine Tragkonstruktion mit in den Eckbereichen E1,E2 des Planenaufbaus P angeordneten Stützrungen 5,6, welche die Stirnwand 3 und die Rückwand 4 halten. Zusätzlich tragen die Stützrungen 5,6 einen an ihrem oberen Ende befestigten, hier nicht sichtbaren Führungsbalken, der sich in Längsrichtung L zwischen den Stützrungen 5,6 parallel zur Ladefläche 7 des Aufliegers A erstreckt.

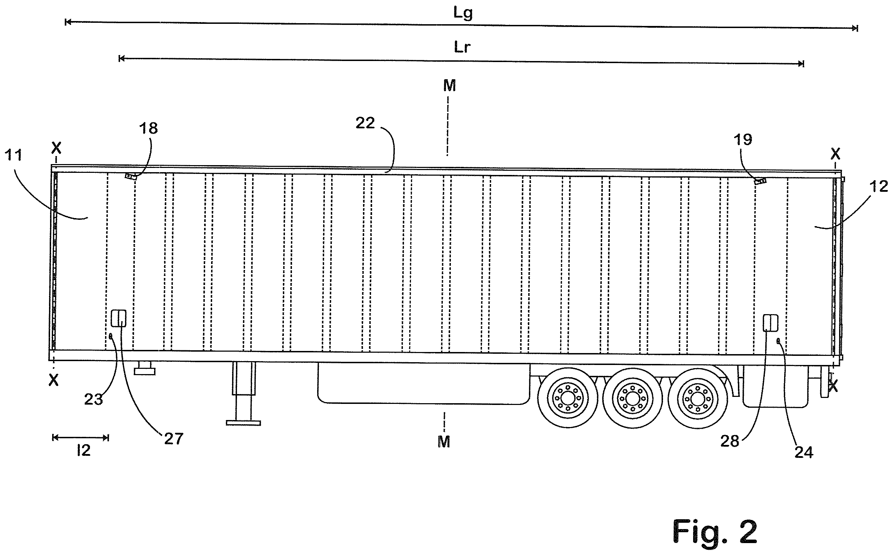

In dem Führungsbalken sind Schieberungen 8,9,10 verschiebbar geführt, die sich wie die Stützrungen 5,6 in Bezug auf die Ladefläche 7 senkrecht ausgerichtet über die Höhe H des Planenaufbaus P erstrecken. Die Schieberungen 8 - 10 sind auf der dem Laderaum R zugeordneten Innenseite der Seitenplane 1 fest mit der Seitenplane 1 verbunden. Dabei sind die Schieberungen 8 - 10 so angeordnet, dass sie bei geschlossenem Planenaufbau P in regelmäßigen Abständen zueinander angeordnet sind (Fig. 2).

Die den Eckbereich E1,E2 direkt benachbart angeordneten Schieberungen 8,10 weisen eine in Längsrichtung L gemessene Breite auf, die größer ist als die Breite der zwischen ihnen angeordneten schmalen Schieberungen 9. Zu diesem Zweck sind die Schieberungen 8,10 in an sich ebenfalls bekannter Weise beispielsweise aus zwei nach Art der schmalen Schieberungen 9 ausgebildeten und in einem definierten Abstand positionierten Schieberungen gebildet, die durch starre Verbindungselemente, wie Bleche, fest miteinander verbunden sind. Die endseitigen Schieberungen 8,10 dienen auf diese Weise als Führungswagen, durch die ein verkantungsfreies, gleichmäßiges Verschieben der Seitenplane 1 gemeinsam mit den übrigen Schieberungen 9 gewährleistet ist.

Die Länge Lr, über die die Schieberungen 8 - 10 bei geschlossenem Planenaufbau P verteilt angeordnet sind, ist geringer als die Gesamtlänge Lg der Seitenplane 1. Dementsprechend steht die Seitenplane 1 an ihren den Eckbereichen E1,E2 zugeordneten Enden jeweils mit einem Endabschnitt 11,12 über die zugeordnete endseitige Schieberunge 8,10 über.

An dem jeweils freien, vertikal ausgerichteten Rand der Endabschnitte 11,12 ist jeweils ein stangenförmiges, sich über die Höhe H erstreckendes Spannelement 13,14 angeordnet. Die Spannelemente 13,14 sind beispielsweise in der in der DE 196 28 431 Cl beschriebenen Weise ausgebildet und mit einem hier nicht dargestellten Rastwerk versehen, um den jeweiligen Endabschnitt 11,12 auf dem zugeordneten Spannelement 13,14 aufzuwickeln. In den Stützrungen 5,6 ist ebenfalls nach Art des in der DE 196 28 431 C1 dokumentierten Standes der Technik eine hier nicht näher dargestellte Arretiereinrichtung 15,16 eingeformt, in der das jeweils zugeordnete Spannelement 13,14 bei verschlossenem Planenaufbau P formschlüssig mit Spiel so gehalten ist, dass es zum Aufwickeln des zugeordneten Endabschnitts 11,12 mittels des Rastwerks um seine Längsachse X gedreht werden kann und bei gelöstem Rastwerk und gelockertem jeweiligen Endabschnitt 11,12 aus der Arretiereinrichtung 15,16 entnommen werden kann. Durch das Aufwickeln mindestens eines der Endabschnitte 11,12 auf das ihm zugeordnete Spannelement 13,14 kann die Seitenplane 1 in Längsrichtung L des Planenaufbaus P so gespannt werden, dass die Seitenplane 1 insgesamt gleichmäßig straff mit einer weitgehend ebenen Außenfläche 17 zwischen den Stützrungen 5,6 gehalten ist. Dementsprechend kann durch Abwickeln des jeweiligen Endabschnitts 11,12 die Seitenplane 1 so gelockert werden, dass die Spannelemente 13,14 zum Aufschieben der Seitenplane 1 aus den zugeordneten Arretiereinrichtungen 15,16 entnommen werden können.

Im oberen, dem Dach 2 zugeordneten Bereich der endseitigen, als Führungswagen ausgebildeten Schieberungen 8,10 ist auf der Außenfläche 17 jeweils eine Aufnahme 18,19 angeordnet. Die Aufnahmen 18,19 sind dabei durch jeweils einen Bandabschnitt aus einem robusten, textilen Material gebildet, der unter Ausbildung einer Schlaufe 20 auf die Seitenplane 1 aufgenietet ist. Dabei greifen die Nieten durch das an der Innenseite der Seitenplane 1 anliegende Blech der jeweils zugeordneten Schieberunge 8,10, so dass die Aufnahmen 18,19 auch mit der jeweiligen Schieberunge 8,10 fest verbunden sind. Die Schlaufenöffnung der Aufnahmen 18,19 ist dabei jeweils so bemessen, dass das jeweils zugeordnete Spannelement 13,14 mit seinem zylindrischen Endabschnitt 21 mit leichtem Spiel nahezu widerstandsfrei in die jeweilige Aufnahme 18,19 eingeführt werden kann, wenn das jeweilige Spannelement 13,14 zum Aufschieben der Seitenplane 1 aus der zugeordneten Arretiereinrichtung 15,16 entnommen worden ist.

Die Aufnahmen 18,19 sind in Längsrichtung L gesehen gegenüber der jeweils zugeordneten Stützrunge 5,6 um einen Abstand 11 in Richtung der Mitte M der Seitenplane 1 und um einen Abstand h1 in Richtung der Höhe H gesehen gegenüber dem Dach 2 des Planenaufbaus P versetzt angeordnet. Der Versatz ist dabei jeweils so bemessen, dass bei in die jeweilige Aufnahme 18,19 eingeführtem Endabschnitt 21 der Spannelemente 13,14 der obere, auf die jeweilige Schieberunge 8,10 umgefaltete Bereich des jeweiligen Endabschnitts 11,12 der Seitenplane 1 zwischen dem Punkt, an dem der betreffende Endabschnitt 11,12 oben an der ihm zugeordneten Schieberunge 8,10 befestigt ist, und der jeweiligen Aufnahme 18,19 straff gespannt ist und unter einem spitzen Winkel auf den oberen Rand der jeweiligen Schieberunge 8,10 zuläuft. Auf diese Weise ist bei für das Verschieben der Seitenplane umgefaltetem Endabschnitt 11,12 der reibende Kontakt zwischen dem betreffenden Endabschnitt 11,12 und einer sich über die Länge Lg des Planenaufbaus P erstreckende Dichtlippe 22 minimiert, die am Übergang zwischen der Seitenplane 1 und dem Dach 2 montiert ist und den Spalt zwischen dem Führungsbalken und der an ihm geführten Seitenplane 1 gegenüber der Umgebung U abschirmt.

Zusätzlich ist im Bereich der Schieberungen 8,10 jeweils nahe der Ladefläche 7 auf der Außenfläche 17 der Seitenplane 1 jeweils eine Halteeinrichtung 23,24 in Form eines Hakens montiert. Die Halteeinrichtungen 23,24 sind ebenfalls so an der Seitenplane 1 befestigt, dass sie zusätzlich fest mit der zugeordneten Schieberunge 8,10 verbunden sind. Dabei sind die Halteeinrichtungen 23,24 in Längsrichtung L gesehen jeweils um einen Abstand 12 gegenüber der zugeordneten Stützrunge 5,6 in Richtung der Mitte M der Seitenplane 1 versetzt angeordnet, der kleiner ist als der Abstand 11 bei den Aufnahmen 18,19. Dementsprechend ist der Abstand der Halteeinrichtungen 23,24 zur Mitte M der Seitenplane 1 jeweils größer als der Abstand der Aufnahmen 18,19 zur Mitte M.

Zum Befestigen des für das Aufschieben der Seitenplane 1 aus der jeweiligen Arretiereinrichtung 15,16 gelösten und mit seinem oberen Endabschnitt in die zugeordnete Aufnahme 18,19 eingeführten Spannelements 13,14 wird eine an dem Spannelement 13,14 jeweils vorhandene, beispielsweise zur Betätigung des Rastwerks dienende Schlaufe 25,26 in die zugeordnete Halteeinrichtung 23,24 eingehängt. Auf diese Weise nimmt die jeweilige Halteeinrichtung 23,24 das Gewicht des an ihr hängenden jeweiligen Spannelements 13,14 auf. Gleichzeitig ist das jeweilige stangenförmige Spannelement 13,14 durch den geringeren Abstand 12 der jeweiligen Halteeinrichtung 23,24 so an der Seitenplane 1 gehalten, dass es ausgehend von der zugeordneten Aufnahme 18,19 schräg nach hinten verlaufend ausgerichtet ist.

Auf diese Weise bleibt auch bei an der Seitenplane 1 anliegendem Endabschnitt 11, 12 ein im Bereich der jeweiligen Schieberunge 8,10 an der Außenseite der Seitenplane 1 jeweils vorgesehener Griff 27,28 frei zugänglich, durch den das Aufschieben und Zuziehen der Seitenplane 1 erleichtert wird.

### BEZUGSZEICHEN

- A: Auflieger
- P: Planenaufbau
- C: Fahrwerkschassis
- U: Umgebung
- E1,E2: Eckbereiche des Planenaufbaus P
- F: Fahrtrichtung
- H: Höhe des Planenaufbaus P
- L: Längsrichtung
- Lr: Länge Lr, über die die Schieberungen 8-10 bei geschlossenem Planenaufbau P verteilt sind
- Lg: Gesamtlänge der Seitenplane 1
- M: Mitte der Seitenplane 1
- R: Laderaum des Aufliegers A
- X: Längsachse der Spannelemente 13,14
- h1: Abstand
- 11: Abstand
- 12: Abstand
- 1: Seitenplane
- 2: Dach
- 3: Stirnwand
- 4: Rückwand
- 5,6: Stützrungen
- 7: Ladefläche des Aufliegers A
- 8,9,10: Schieberungen
- 11,12: Endabschnitte der Seitenplane 1
- 13,14: Spannelemente
- 15,16: Arretiereinrichtungen
- 17: Außenfläche der Seitenplane 1
- 18,19: Aufnahmen
- 20: Schlaufe
- 21: Endabschnitt der Spannelemente 13,14
- 22: Dichtlippe
- 23,24: Halteeinrichtungen
- 25,26: Schlaufen
- 27,28: Griffe

## Patentansprüche

1. Planenaufbau für ein Nutzfahrzeug,
- der mindestens eine Seitenplane (1),
- mit mindestens einer Schieberunge (8-10), die längs einer Längs-, Stirn- oder Rückseite des Planenaufbaus (P) verschiebbar ist, und
- mit mindestens einem Endabschnitt (11,12), der frei über die Schieberunge (8-10) hinaus steht und an dessen in Schließstellung parallel zur Schieberunge (8-10) ausgerichteten Rand ein Spannelement (13,14) befestigt ist,
sowie
- eine Arretiereinrichtung (15,16) umfasst, die das Spannelement (13,14) bei geschlossenem Planenaufbau (P) in einer Schließposition an dem Planenaufbau (P) hält und lösbar ist, um das Spannelement (13,14) zum Verschieben der Seitenplane (1) in die Öffnungsstellung von der Arretiereinrichtung (15,16) zu trennen,
**dadurch gekennzeichnet, dass** an der Seitenplane (1) eine Aufnahme (18,19) vorhanden ist, in der bei geöffneter Seitenplane (1) das Spannelement (13,14) mit seinem oberen, dem von der Ladefläche (7) des Nutzfahrzeugs abgewandten oberen Rand des Planenaufbaus (P) zugeordneten Endabschnitt (21) fixierbar ist.

2. Planenaufbau nach Anspruch 1, **dadurch gekennzeichnet,** d a s s eine Halteeinrichtung (23,24) vorgesehen, an der bei geöffneter Seitenplane (1) der untere, der Ladefläche (7) zugeordnete Endabschnitt des Spannelements (13,14) an der Seitenplane (1) abstützbar ist.

3. Planenaufbau nach Anspruch 2, **dadurch gekennzeichnet, dass** die Halteeinrichtung (23,24) in Längsrichtung (L) der jeweiligen Seitenplane (1) gesehen einen größeren Abstand zur Mitte (M) der Seitenplane (1) hat als die dem oberen Abschnitt des Spannelements (13,14) zugeordnete Aufnahme (18,19).

4. Planenaufbau nach Anspruch 3, **dadurch gekennzeichnet, dass** bei in der Aufnahme (18,19) fixiertem und an der Halteeinrichtung (23,24) abgestütztem Spannelement (13,14) die auf die Ebene der Seitenplane (1) projizierte Senkrechte auf die Längsachse (X) des Spannelements (13,14) einen spitzen Winkel mit dem oberen Rand der Seitenplane (1) einschließt.

5. Planenaufbau nach einem der Ansprüche 3 oder 4, **dadurch gekennzeichnet, dass** in Längsrichtung der Seitenplane (1) gesehen die Aufnahme (18,19) in Richtung der Mitte (M) der Seitenplane (1) um eine so große Länge versetzt ist, dass der Endabschnitt der Seitenplane (1) bei in der Aufnahme (18,19) fixiertem oberen Endabschnitt (21) des Spannelements (13,14) mit seinem dem betreffenden Endabschnitt des Spannelements (13,14) zugeordneten Flächenabschnitt flach an der Seitenplane (1) anliegt.

6. Planenaufbau nach einem der voranstehenden Ansprüche, **dadurch gekennzeichnet, dass** im Bereich der an den Endabschnitt (11,12) der Seitenplane (1) grenzenden Schieberunge (8,10) ein von der der Umgebung (U) zugeordneten Außenseite (17) der Seitenplane (1) zugänglicher Griff (27,28) vorgesehen ist.

7. Planenaufbau nach Anspruch 6 und einem der Ansprüche 3 bis 5, **dadurch gekennzeichnet, dass** die Aufnahme (18,19) und die Halteeinrichtung (23,24) in Längsrichtung (L) des Planenaufbaus (P) gesehen so versetzt zueinander angeordnet sind, dass das Spannelement (13,14) bei in die Aufnahme (18,19) eingesetztem oberen Endabschnitt (21) und an der Halteeinrichtung (23,24) abgestütztem unteren Endabschnitt des Spannelements (13,14) so schräg über die Schieberunge (8-10) verläuft, dass der Griff (27,28) frei zugänglich ist.

8. Planenaufbau nach einem der voranstehenden Ansprüche, **dadurch gekennzeichnet, dass** die Aufnahme (18,19) durch eine auf die Seitenplane (1) aufgenietete Schlaufe (20) gebildet ist.

9. Planenaufbau nach einem der voranstehenden Ansprüche, **dadurch gekennzeichnet, dass** die Halteeinrichtung (23,24) durch einen an der Seitenplane (1) befestigten Haken gebildet ist.

10. Planenaufbau nach einem der voranstehenden Ansprüche, **dadurch gekennzeichnet, dass** die Aufnahme (18,19) fest mit der Schieberunge (8-10) verbunden ist.

11. Planenaufbau nach einem der voranstehenden Ansprüche, **dadurch gekennzeichnet, dass** die Halteeinrichtung (23,24) fest mit der Schieberunge (8-10) verbunden ist.

12. Planenaufbau nach einem der voranstehenden Ansprüche, **dadurch gekennzeichnet, dass** die Halteeinrichtung (23,24) und die Aufnahme (18,19) an der der Umgebung (U) des Planenaufbaus (P) zugeordneten Außenseite (17) des Planenaufbaus (P) positioniert sind.

13. Planenaufbau nach einem der voranstehenden Ansprüche, **dadurch gekennzeichnet, dass** das Spannelement (13,14) eine Betätigungseinrichtung zum Spannen der Seitenplane (1) im geschlossenen Zustand umfasst.

## Claims

1. Tarpaulin structure for a commercial vehicle,
- which comprises at least one side tarpaulin (1),
- with at least one sliding stanchion (8-10) which can be displaced along a longitudinal, front or rear side of the tarpaulin structure (P), and
- with at least one end section (11, 12) which protrudes freely over the sliding stanchion (8-10) and a clamping element (13, 14) which is fastened to its edge, aligned parallel to the sliding stanchion (8-10) in the closed position,
as well as
- a lock-off device (15, 16) which holds the clamping element (13, 14) in a closed position on the tarpaulin structure (P) when the tarpaulin structure (P) is closed and is detachable in order to separate the clamping element (13, 14) from the lock-off device (15, 16) to displace the side tarpaulin (1) into the open position,
**characterised in that** a receiving portion (18, 19) is present on the side tarpaulin (1) in which the clamping element (13, 14) can be fixed with its upper end section (21) assigned to the upper edge of the tarpaulin structure (P) facing away from the loading surface (7) of the commercial vehicle when the side tarpaulin (1) is open.

2. Tarpaulin structure according to claim 1, **characterised in that** a holding device (23, 24) is provided on which the lower end section of the clamping element (13, 14) assigned to the loading surface (7) can be supported on the side tarpaulin (1) when the side tarpaulin (1) is open.

3. Tarpaulin structure according to claim 2, **characterised in that** the holding device (23, 24) viewed in the longitudinal direction (L) of the respective side tarpaulin (1) has a greater distance to the centre (M) of the side tarpaulin (1) than the receiving portion (18, 19) assigned to the upper section of the clamping element (13, 14).

4. Tarpaulin structure according to claim 3, **characterised in that** the vertical projected onto the plane of the side tarpaulin (1) on the longitudinal axis (X) of the clamping element (13, 14) encloses an acute angle with the upper edge of the side tarpaulin (1) when the clamping element (13, 14) is fixed in the receiving portion (18, 19) and supported on the holding device (23, 24).

5. Tarpaulin structure according to any one of claims 3 or 4, **characterised in that** viewed in the longitudinal direction of the side tarpaulin (1) the receiving portion (18, 19) is offset in the direction of the centre (M) of the side tarpaulin (1) by such a great length that the end section of the side tarpaulin (1) rests flat on the side tarpaulin (1) with its surface section assigned to the relevant end section of the clamping element (13, 14) when the upper end section (21) of the clamping element (13, 14) is fixed in the receiving portion (18, 19).

6. Tarpaulin structure according to any one of the preceding claims, **characterised in that** a handle (27, 28) accessible from the outer side (17) of the side tarpaulin (1) assigned to the environment (U) is provided in the region of the sliding stanchion (8, 10) bordering the end section (11, 12) of the side tarpaulin (1).

7. Tarpaulin structure according to claim 6 and any one of claims 3 to 5, **characterised in that** the receiving portion (18, 19) and the holding device (23, 24) viewed in the longitudinal direction (L) of the tarpaulin structure (P) are arranged offset to each other such that when the upper end section (21) is inserted into the receiving portion (18, 19) and the lower end section of the clamping element (13, 14) is supported on the holding device (23, 24), the clamping element (13, 14) runs inclined over the sliding stanchions (8-10) such that the handle (27, 28) is freely accessible.

8. Tarpaulin structure according to any one of the preceding claims, **characterised in that** the receiving portion (18, 19) is formed by a loop (20) riveted on the side tarpaulin (1).

9. Tarpaulin structure according to any one of the preceding claims, **characterised in that** the holding device (23, 24) is formed by a hook fastened to the side tarpaulin (1).

10. Tarpaulin structure according to any one of the preceding claims, **characterised in that** the receiving portion (18, 19) is fixedly connected with the sliding stanchion (8-10).

11. Tarpaulin structure according to any one of the preceding claims, **characterised in that** the holding device (23, 24) is fixedly connected to the sliding stanchions (8-10).

12. Tarpaulin structure according to any one of the preceding claims, **characterised in that** the holding device (23, 24) and the receiving portion (18, 19) are positioned at the outer side (17) of the tarpaulin structure (P) assigned to the environment (U) of the tarpaulin structure (P).

13. Tarpaulin structure according to any one of the preceding claims, **characterised in that** the clamping element (13, 14) comprises an actuation device for clamping the side tarpaulin (1) in the closed state.

## Revendications

1. Superstructure bâchée pour un véhicule utilitaire,
- qui comporte au moins une bâche latérale (1),
- avec au moins un rancher coulissant (8-10) qui est déplaçable le long d'un côté longitudinal, frontal ou arrière de la superstructure bâchée (P), et
- avec au moins une section terminale (11, 12) qui est située librement au delà du rancher coulissant (8-10) et sur son bord orienté, en position fermée, parallèlement au rancher coulissant (8-10) est fixé un élément de serrage (13, 14),
ainsi que
- un dispositif de blocage (15, 16) qui maintient l'élément de serrage (13, 14), lors d'une superstructure bâchée (P) fermée en une position de fermeture, sur la superstructure bâchée (P) et qui est amovible, afin de séparer l'élément de serrage (13, 14) du dispositif de blocage (15, 16) pour le déplacement de la bâche latérale (1) dans la position d'ouverture,
**caractérisée en ce que** l'on prévoit un logement (18, 19) sur la bâche latérale (1), dans lequel l'on peut fixer, lors d'une bâche latérale (1) ouverte, l'élément de serrage (13, 14) avec sa section terminale (21) supérieure associée au bord supérieur de la superstructure bâchée (P) opposé à la surface de chargement (7) du véhicule utilitaire.

2. Superstructure bâchée selon la revendication 1, **caractérisée en ce que** l'on prévoit un dispositif de retenue (23,24) sur lequel, lors d'une bâche latérale ouverte (1), la section terminale inférieure de l'élément de serrage (13,14) orientée vers la surface de chargement (7) peut être soutenue sur la bâche latérale (1).

3. Superstructure bâchée selon la revendication 2, **caractérisée en ce que** le dispositif de retenue (23, 24) présente, vu en direction longitudinale (L) de la bâche latérale (1) respective, une distance supérieure par rapport au centre (M) de la bâche latérale (1) que le logement (18, 19) associé à la section supérieure de l'élément de serrage (13, 14).

4. Superstructure bâchée selon la revendication 3, **caractérisée en ce que**, lors d'un élément de serrage (13, 14) fixé dans le logement (18, 19) et en appui sur le dispositif de retenue (23, 24), la verticale projetée sur la plan de la bâche latérale (1) définit, sur l'axe longitudinal (X) de l'élément de serrage (13, 14), un angle aigu avec le bord supérieur de la bâche latérale (1).

5. Superstructure bâchée selon une des revendications 3 ou 4, **caractérisée en ce que,** vu en direction longitudinale de la bâche latérale (1), le logement (18,19) est décalé d'une telle longueur importante en direction du centre (M) de la bâche latérale (1) que la section terminale de la bâche latérale (1), lors d'une section terminale (21) supérieure de l'élément de serrage (13, 14) fixée dans le logement (18, 19), repose à plat sur la bâche latérale (1) avec sa section de surface associée à la section terminale concernée de l'élément de serrage (13,14).

6. Superstructure bâchée selon une des revendications précédentes, **caractérisée en ce que** l'on prévoit, dans le secteur du rancher coulissant (8, 10) adjacent à la section terminale (11, 12) de la bâche latérale (1), une poignée (27, 28) accessible à partir du côté extérieur (17) de la bâche latérale (1) associé à la zone environnante (U).

7. Superstructure bâchée selon la revendication 6 et une des revendications de 3 à 5, **caractérisée en ce que** le logement (18, 19) et le dispositif de retenue (23, 24) sont agencés mutuellement décalés, vus en direction longitudinale (L) de la superstructure bâchée (P), de telle sorte que l'élément de serrage (13, 14), lors d'une section terminale (21) supérieure insérée dans le logement (18, 19) et lors d'une section terminale inférieure de l'élément de serrage (13, 14) en appui sur le dispositif de retenue (23, 24), passe tellement incliné au-delà du rancher coulissant (8-10) que la poignée (27, 28) est librement accessible.

8. Superstructure bâchée selon une des revendications précédentes, **caractérisée en ce que** le logement (18, 19) est formé par une boucle (20) rivetée sur la bâche latérale (1).

9. Superstructure bâchée selon une des revendications précédentes, **caractérisée en ce que** le dispositif de retenue (23, 24) est formé par un crochet fixé sur la bâche latérale (1).

10. Superstructure bâchée selon une des revendications précédentes, **caractérisé en ce que** le logement (18, 19) est fermement relié au rancher coulissant (8-10).

11. Superstructure bâchée selon une des revendications précédentes, **caractérisée en ce que** le dispositif de retenue (23,24) est relié fermement au rancher coulissant (8-10).

12. Superstructure bâchée selon une des revendications précédentes, **caractérisée en ce que** le dispositif de retenue (23, 24) et le logement (18, 19) sont positionnés sur le côté extérieur (17) de la superstructure bâchée (P) associé à la zone environnante (U) de la superstructure bâchée (P).

13. Superstructure bâchée selon une des revendications précédentes, **caractérisée en ce que** l'élément de serrage (13, 14) comporte un dispositif d'actionnement pour le serrage de la bâche latérale (1) à l'état fermé.
